# EUROPÄISCHE PATENTANMELDUNG

(11) **EP 2 736 264 A2**
(43) Veröffentlichungstag der Anmeldung: **28.05.2014**
(21) Anmeldenummer: 13188253.2
(22) Anmeldetag: 11.10.2013
(51) Int. Cl.: H04Q 9/00

(54) **Funkaufsatzmodul zum Anbau an einen Wasser- oder Wärmezähler**

(30) Priorität: 23.11.2012 DE 202012104545 U
(71) Anmelder: Engelmann Sensor GmbH, 69168 Wiesloch-Baiertal (DE)
(72) Erfinder: Wally, Wolfgang, 76669 Bad-Schönborn (DE); Herrmann, Kevin, 69214 Eppelheim (DE); Sturek, Robert, 69242 Mühlhausen (DE)
(74) Vertreter: Durm & Partner

(57) **Zusammenfassung**

Ein Funkaufsatzmodul zum Anbau an einen Wasser- oder Wärmezähler (1) hat ein Gehäuse (5), einen Funksender (14) mit Sendeantenne (15) und eine optische Schnittstelle (9) zur Ankopplung eines Optokopfes (8), der mit einem Permanentmagneten (13) ausgerüstet ist. Am Gehäuse (5) ist eine Anlagefläche (7) für den Optokopf (8) ausgebildet. Die Sendeantenne (15) ist flächig ausgebildet, verläuft parallel zu der Anlagefläche (7) und besteht aus magnetisierbarem Metall. Der Optokopf (8) haftet auf der Anlagefläche (7) durch Magnetkraft.

## Beschreibung

Die Erfindung betrifft ein Funkaufsatzmodul zum Anbau an einen Wasser- oder Wärmezähler. Es hat ein geschlossenes Gehäuse, einen darin eingebauten Funksender mit einer Sendeantenne, über die von dem Wasser- oder Wärmezähler aufgenommene Daten an ein entfernt angeordnetes Auslesesystem gesendet werden, eine optische Schnittstelle zur temporären Ankopplung eines Optokopfes, um Daten zwischen einem Computer und dem Funkaufsatzmodul auszutauschen, und eine am Gehäuse ausgebildete Anlagefläche für den Optokopf, der mit einem Permanentmagneten ausgerüstet ist.

Es sind Funkaufsatzmodule bekannt, die an hierfür vorbereitete Wasser- oder Wärmezähler montiert werden können. Solche Funkaufsatzmodule übermitteln die von den Wasser- oder Wärmezähler aufgenommenen Daten an ein entfernt angeordnetes Auslesesystem. Ein Ablesen des Wasser- oder Wärmeverbrauchs erfolgt nicht direkt am Wasser- oder Wärmezähler, sondern kann mittels des Auslesesystems beispielsweise außerhalb der Wohnung oder des Gebäudes, in dem der Wasser- oder Wärmezähler angeordnet ist, durchgeführt werden.

Vor oder nach der Montage des Funkaufsatzmoduls an einem Wasser- oder Wärmezähler muss dieses einmalig parametriert werden. Dies bedeutet, dass verschiedene Parameter, wie beispielsweise die Gerätenummer oder der Zählerstand des Wasser- oder Wärmezählers, die Sendehäufigkeit, mit der das Funkaufsatzmodul Daten an das Auslesesystem sendet, oder der Umfang der gesendeten Daten eingestellt werden. Hierzu weist das Funkaufsatzmodul eine optische Schnittstelle auf, über die Daten zwischen dem Funkaufsatzmodul und einem optischen Sende- und Empfangsmodul (Optokopf) ausgetauscht werden können. Während der gesamten Dauer einer Parametrierung muss der Optokopf über der optischen Schnittstelle des Funkaufsatzmoduls gehalten werden. Sollte der Optokopf während der Datenübertragung verrutschen, führt dies zu einer Unterbrechung der Datenübertragung. Das manuelle Halten des Optokopfes ist für den Techniker, der das Funkaufsatzmodul parametriert, unkomfortabel. Er hat dann nicht beide Hände zur Bedienung eines Rechners frei.

Angesichts dieser Problematik ist es Aufgabe der vorliegenden Erfindung, ein Funkaufsatzmodul zum Anbau an einem Wasser- oder Wärmezähler zu schaffen, das eine bequeme und störungsfreie Ankopplung eines Optokopfes erlaubt, um die Parametrierung durchzuführen.

Bei der Lösung dieser Aufgabe wird ausgegangen von einem Funkaufsatzmodul gemäß dem Oberbegriff des Anspruchs 1. Gelöst wird die Aufgabe durch die im Kennzeichen des Anspruchs 1 angegebenen konstruktiven Merkmale.

Bei dem erfindungsgemäßen Funkaufsatzmodul ist die Sendeantenne flächig ausgebildet, verläuft parallel zu der Anlagefläche für den Optokopf und besteht zumindest abschnittsweise aus magnetisierbarem Metall, so dass der Optokopf auf der Anlagefläche durch Magnetkraft haftet.

Bei der Parametrierung des Funkaufsatzmoduls wird der Optokopf über der optischen Schnittstelle des Funkaufsatzmoduls positioniert. Der im Optokopf angeordnete Permanentmagnet richtet die Elementarmagneten in der Sendeantenne derart aus, dass der Optokopf auf die Anlagefläche des Funkaufsatzmodul gezogen wird und in dieser Position verharrt. Bevorzugt sind die magnetischen Anziehungskräfte so hoch, dass ein Verrutschen des Optokopfes aufgrund seines Eigengewichts und/oder aufgrund von leichten Stößen vermieden wird.

Als Material für die Sendeantenne sind alle eisenhaltigen Metalle geeignet. Bevorzugt wird eine eisenhaltige Legierung mit Korrosionsschutz zur Herstellung der Sendeantenne verwendet. Das Aussenden von Daten mithilfe der Sendeantenne wird durch die eisenhaltigen Metalle nicht beeinflusst.

Indem die Sendeantenne flächig ausgebildet ist, können die Anziehungskräfte zwischen dem Permanentmagneten des Optokopfes und der Sendeantenne über alle Abschnitte der Sendeantenne wirken, die aus magnetisierbarem Metall bestehen. Somit ist eine gute Haftung des Optokopfes auf der Anlagefläche des Funkaufsatzmoduls gewährleistet.

Bevorzugt ist die Sendeantenne im Innern des Gehäuses angeordnet und erstreckt sich knapp unterhalb der Anlagefläche für den Optokopf.

Indem die Sendeantenne parallel zu der Anlagefläche für den Optokopf verläuft, verändert sich der Abstand zwischen Sendeantenne und ggfs. aufgelegtem Optokopf über die Fläche der Sendeantenne nicht. Dadurch ist gewährleistet, dass die magnetischen Anziehungskräfte zwischen Sendeantenne und Optokopf in den Abschnitten der Sendeantenne, die aus magnetisierbarem Metall bestehen, gleichmäßig sind.

Bevorzugt besteht die Sendeantenne vollständig aus magnetisierbarem Metall. Die magnetischen Anziehungskräfte wirken über die gesamte Fläche der Sendeantenne, wodurch ein besonders sicheres Halten des Optokopfes an der Anlagefläche des Funkaufsatzmoduls gewährleistet ist.

Es ist zweckmäßig, die Sendeantenne als Dipol auszubilden. Die Sendeantenne wandelt hochfrequenten Wechselstrom in elektromagnetische Wellen um, mittels derer die erfassten Daten aus dem Wasser- oder Wärmezählers an das Auslesesystem übertragen werden. Beispielsweise ist die Sendeantenne als Faltdipol ausgebildet. Es sind aber auch andere Ausbildungen der Dipolantenne denkbar.

In vorteilhafter Weise ist die Sendeantenne aus zwei voneinander getrennten Teilflächen gebildet, die über einen schmalen Steg miteinander verbunden sind. Bevorzugt sind die Teilflächen nebeneinander angeordnet und zumindest teilweise durch einen Spalt voneinander getrennt.

Besonders zweckmäßig ist es, die Sendeantenne in geringem Abstand unterhalb der Anlagefläche anzuordnen. Somit ist gewährleistet dass der Abstand zwischen der magnetisierbaren Sendeantenne und dem Optokopf möglichst gering ist. Ein geringer Abstand der Sendeantenne zu der Anlagefläche bewirkt eine hohe Anziehungskraft zwischen der Sendeantenne und dem Permanentmagneten des Optokopfes.

Ein weiteres wesentliches Merkmal der Erfindung ist, dass die Sendeantenne eine Aussparung aufweist, in der die optische Schnittstelle angeordnet ist. Bevorzugt ist die Aussparung kreisförmig ausgebildet, wobei der Rand der Aussparung von der optischen Schnittstelle beabstandet angeordnet ist. Somit wird ein Kontakt zwischen der optischen Schnittstelle und der Sendeantenne und damit auch ein gegenseitiges Stören der Datenübertragungen vermieden. Beispielsweise ragt die optische Schnittstelle in Richtung der Anlagefläche des Funkaufsatzmoduls zumindest abschnittsweise oder vollständig über die Sendeantenne hinaus und kann an der Anlagefläche mit dem Optokopf zur Datenübertragung gekoppelt werden. Zweckmäßig besteht das Gehäuse des Funkaufsatzmoduls aus Kunststoff, der zumindest im Bereich der optischen Schnittstelle durchsichtig oder transluzent ist.

Bei einer bevorzugten Ausführungsform ist an der Anlagefläche eine Positionierleiste zur seitlichen Fixierung des Optokopfes über der optischen Schnittstelle vorgesehen. Soll das Funkaufsatzmodul parametriert werden, wird der Optokopf einfach an der Anlagefläche angelegt und mit der Positionierleiste in Kontakt gebracht. Dadurch kann der Optokopf schnell und einfach an dem Funkaufsatzmodul fixiert werden.

Besonders bevorzugt ist eine Ausführung, bei der die Positionierleiste konzentrisch zur optischen Schnittstelle angeordnet ist. Beispielsweise steht die Positionierleiste von der Anlagefläche ab und weist einen bogenförmigen Verlauf auf. Bevorzugt erstreckt sich die Positionierleiste über einen Teil eines Kreisbogens, insbesondere über einen Teil eines Halbkreisbogens.

In besonders vorteilhafter Weise ist der Optokopf durch Anlage an der Positionierleiste konzentrisch zu der optischen Schnittstelle angeordnet. Durch Anlegen des Optokopfes an die Positionierleiste richtet sich dieser relativ zu der optischen Schnittstelle automatisch aus. Somit ist eine optimale Positionierung des Optokopfes relativ zu der optischen Schnittstelle und damit eine möglichst gute Signalübertragung zwischen der optischen Schnittstelle und dem Optokopf gewährleistet. Beispielsweise entspricht der Innendurchmesser der Positionierleiste dem Außendurchmesser des Optokopfes.

Ein Ausführungsbeispiel der Erfindung wird nachstehend anhand der beigefügten Zeichnungen beschrieben. Es zeigen:
- Figur 1: einen Wasserzähler mit anmontiertem Funkaufsatzmodul und einen Optokopf, in einer perspektivischen Ansicht;
- Figur 2: den Wasserzähler mit Funkaufsatzmodul und aufgesetztem Optokopf, teilweise geschnitten entlang der Linie A-A in Figur 1.

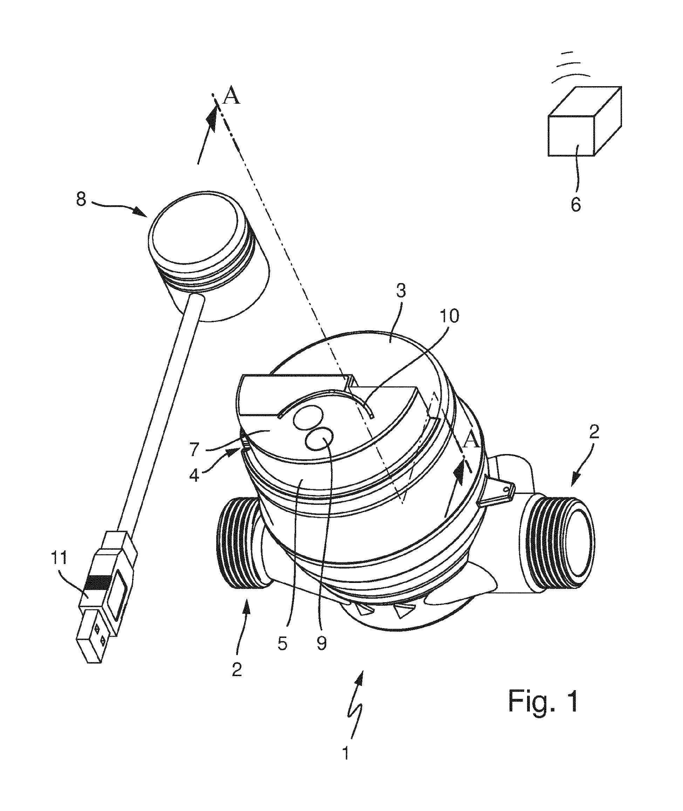

Figur 1 zeigt einen Wasserzähler 1 mit Anschlüssen 2, über die der Wasserzähler 1 an einer Wasserleitung (nicht dargestellt) angeschlossen werden kann. Der Wasserzähler 1 hat ein Wasserzählergehäuse 3, an das ein Funkaufsatzmodul 4 mit einem eigenen Gehäuse 5 angesetzt ist. Das Wasserzählergehäuse 3 und das Gehäuse 5 des Funkaufsatzmoduls 4 sind miteinander verschraubt und sind derart ausgebildet, dass sie die Bauteile des Wasserzählers 1 und des Funkaufsatzmoduls 4 vor Wasser schützen.

Das Funkaufsatzmodul 4 sendet die von dem Wasserzähler 1 aufgenommenen Daten an ein entfernt angeordnetes Auslesesystem 6, das beispielsweise als Computer ausgebildet ist.

Das Gehäuse 5 des Funkaufsatzmoduls 4 weist an seiner Oberseite eine ebene Anlagefläche 7 auf, an der ein optisches Sende- und Empfangsmodul 8 (Optokopf) bei der Parametrierung des Funkaufsatzmoduls 4 zur Anlage kommt. Das Funkaufsatzmodul 4 hat ferner eine als Infrarotschnittstelle 9 ausgebildete optische Schnittstelle zur temporären Ankopplung des Optokopfes 8. Die Infrarotschnittstelle 9 ist kreisförmig und befindet sich an der Anlagefläche 7 des Funkaufsatzmoduls 4. Das Gehäuse 5 besteht aus durchsichtigem Kunststoff.

Optional ist am Rand der Anlagefläche 7 eine Positionierleiste 10 zur Positionierung des Optokopfes 8 über der Infrarotschnittstelle 9 angeordnet. Die Positionierleiste 10 weist einen bogenförmigen Verlauf auf und ist konzentrisch zu der Infrarotschnittstelle 9 angeordnet. Der bogenförmige Verlauf entspricht in seinem Durchmesser dem Außendurchmesser des Optokopfes 8, so dass der Optokopf 8 bei Anlage an der Positionierleiste 10 konzentrisch zu der Infrarotschnittstelle 9 angeordnet ist. Es ist auch denkbar, anstelle der Positionierleiste 10 mehrere Erhebungen am Rand der Anlagefläche 7 anzuordnen. Diese sind entlang eines Kreisbogens, der konzentrisch zu der Infrarotschnittstelle 9 verläuft, positioniert. Die Erhebungen stehen von der Anlagefläche 7 vertikal ab und bilden Anschläge, an denen der Optokopf 8 zur Positionierung über der Infrarotschnittstelle 9 anschlägt.

Der Optokopf 8 weist einen USB-Stecker 11 auf, um den Optokopf 8 mit einem Computer (nicht dargestellt) zur Parametrierung des Funkaufsatzmoduls 4 zu verbinden. Es ist aber auch denkbar, den Optokopf 8 mit anderen gängigen Schnittstellen auszustatten, welche eine Verbindung mit einem Computer oder Einstellgerät ermöglichen.

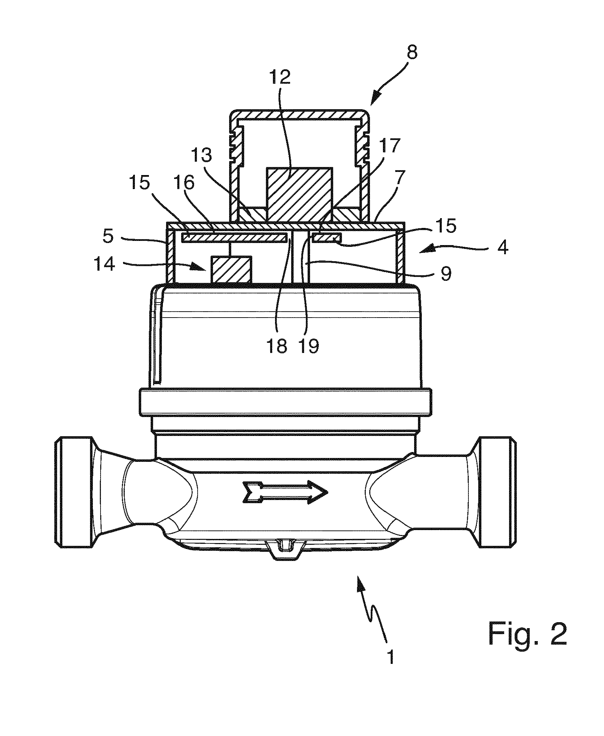

Figur 2 zeigt den Wasserzähler 1 mit anmontiertem Funkaufsatzmodul 4 und darauf aufgesetztem Optokopf 8 in einer teilweise geschnittenen Ansicht.

Der Optokopf 8 sitzt in Figur 2 auf der Anlagefläche 7 des Funkaufsatzmoduls 4. Er weist eine optische Sende- und Empfangseinheit 12 auf, über die der Optokopf 8 mit der Infrarotschnittstelle 9 des Funkaufsatzmoduls 4 zur Parametrierung desselben temporär gekoppelt ist. Darüber hinaus umfasst der Optokopf 8 einen ringförmigen Permanentmagneten 13.

Innerhalb des Gehäuses 5 des Funkaufsatzmoduls 4 ist ein Funksender 14 mit einer Sendeantenne 15 angeordnet, über die von dem Wasserzähler 1 erfassten Daten an das entfernt angeordnete Auslesesystem 6 (Figur 1) gesendet werden. Die Sendeantenne 15 ist als Dipol ausgebildet und besteht vollständig aus magnetisierbarem Metall. Die Sendeantenne 15 ist flächig ausgebildet und erstreckt sich parallel zu der Anlagefläche 7.

Der Dipol der plattenförmigen Sendeantenne 15 wir durch eine erste Teilfläche 16 und eine zweite Teilfläche 17 gebildet, die über einen schmalen Steg (nicht dargestellt) miteinander verbunden sind. Die Sendeantenne 15 ist im Gehäuse 5 in geringem Abstand unterhalb der Anlagefläche 7 angeordnet, so dass der Permanentmagnet 13 beim Auflegen des Optokopfes 8 auf die Anlagefläche 7 die Sendeantenne 15 im Funkaufsatzmodul 4 magnetisiert und dadurch der Optokopf 8 auf der Anlagefläche 7 magnetisch haftet.

Um eine sichere Kopplung der Sende- und Empfangseinheit 12 des Optokopfes 8 und der Infrarotschnittstelle 9 des Funkaufsatzmoduls 4 zu ermöglichen, weist die Sendeantenne 15 eine Aussparung 18 mit einem Rand 19 auf, in welcher die Schnittstelle 9 angeordnet ist. Die Aussparung 18 ist kreisförmig, wobei der Rand 19 der Aussparung 18 von der Infrarotschnittstelle 9 beabstandet ist. Die Aussparung 18 geht in einen Spalt über, der die Teilflächen 16, 17 teilweise voneinander trennt.

### Bezugszeichenliste

- 1: Wasserzähler
- 2: Anschlüsse
- 3: Wasserzählergehäuse
- 4: Funkaufsatzmodul
- 5: Gehäuse (Funkaufsatzmodul)
- 6: Auslesesystem
- 7: Anlagefläche (Gehäuse)
- 8: Optokopf
- 9: Infrarotschnittstelle (Funkaufsatzmodul)
- 10: Positionierleiste (Gehäuse)
- 11: USB-Stecker

- 12: Sende- und Empfangseinheit
- 13: Permanentmagnet
- 14: Funksender (Funkaufsatzmodul)
- 15: Sendeantenne
- 16: erste Teilfläche (Sendeantenne)
- 17: zweite Teilfläche (Sendeantenne)
- 18: Aussparung
- 19: Rand (Aussparung)

## Patentansprüche

1. Funkaufsatzmodul zum Anbau an einen Wasser- oder Wärmezähler (1), mit
einem geschlossenen Gehäuse (5),
einem Funksender (14) mit einer Sendeantenne (15), über die von dem Wasser- oder Wärmezähler (1) aufgenommene Daten an ein entfernt angeordnetes Auslesesystem (6) gesendet werden,
einer optischen Schnittstelle (9) zur temporären Ankopplung eines Optokopfes (8), um Daten zwischen einem Computer und dem Funkaufsatzmodul (4) auszutauschen,
einer am Gehäuse (5) ausgebildeten Anlagefläche (7) für den Optokopf (8), der mit einem Permanentmagneten (13) ausgerüstet ist,
**dadurch gekennzeichnet,**
**dass** die Sendeantenne (15) flächig ausgebildet ist, parallel zu der Anlagefläche (7) für den Optokopf (8) verläuft und zumindest abschnittsweise aus magnetisierbarem Metall besteht, sodass der Optokopf (8) auf der Anlagefläche (7) durch Magnetkraft haftet.

2. Funkaufsatzmodul nach Anspruch 1, **dadurch gekennzeichnet, dass** die Sendeantenne (15) vollständig aus magnetisierbarem Metall besteht.

3. Funkaufsatzmodul nach einem der vorhergehenden Ansprüche, **dadurch gekennzeichnet, dass** die Sendeantenne (15) als Dipol ausgebildet ist.

4. Funkaufsatzmodul nach Anspruch 3, **dadurch gekennzeichnet, dass** die Sendeantenne (15) aus zwei voneinander getrennte Teilflächen (16, 17) gebildet ist, die über einen schmalen Steg miteinander verbunden sind.

5. Funkaufsatzmodul nach einem der vorhergehenden Ansprüche, **dadurch gekennzeichnet, dass** die Sendeantenne (15) im Innern des Gehäuses (5) angeordnet ist und sich in geringem Abstand unterhalb der Anlagefläche (7) erstreckt ist.

6. Funkaufsatzmodul nach einem der vorhergehenden Ansprüche, **dadurch gekennzeichnet, dass** die Sendeantenne (15) eine Aussparung (18) aufweist, in der die optische Schnittstelle (9) angeordnet ist.

7. Funkaufsatzmodul nach einem der vorhergehenden Ansprüche, **dadurch gekennzeichnet, dass** an der Anlagefläche (7) eine Positionierleiste (10) zur Positionierung des Optokopfes (8) über der optischen Schnittstelle (9) angeordnet ist.

8. Funkaufsatzmodul nach Anspruch 7, **dadurch gekennzeichnet, dass** die Positionierleiste (10) kreisförmig gebogen und konzentrisch zur optischen Schnittstelle (9) angeordnet ist.

9. Funkaufsatzmodul nach einem der Ansprüche 7 oder 8, **dadurch gekennzeichnet, dass** der Optokopf (8) bei Anlage an der Positionierleiste (10) auf der optischen Schnittstelle (9) angeordnet ist.

10. Funkaufsatzmodul nach einem der Ansprüche 5 bis 9, **dadurch gekennzeichnet, dass** das Gehäuse (5) zumindest im Bereich der optischen Schnittstelle 9 aus durchsichtigem Material, insbesondere aus durchsichtigem Kunststoff besteht.
